# FASCICULE DE BREVET EUROPEEN

(11) **EP 1 898 341 B1**
(45) Date de publication et mention de la délivrance du brevet: **29.12.2010**
(21) Numéro de dépôt: 07115406.6
(22) Date de dépôt: 31.08.2007
(51) Int. Cl.: G06K 17/00, B65G 1/137, B66F 9/075, G06Q 10/00

(54) **Système automatisé de réalisation d'inventaires localisés**
Automatisches System zur Durchführung von lokalisierten Bestandsaufnahmen
Automated system for drawing up localised inventories

(30) Priorité: 31.08.2006 FR 0653522
(43) Date de publication de la demande: 12.03.2008
(73) Titulaire: NBG ID, 84300 Cavaillon (FR); Neopost Technologies, 92220 Bagneux (FR)
(72) Inventeur: Fabre, Bruno, 84300 Cavaillon (FR); Chateau, Nathalie, 84300 Cavaillon (FR); Vallet, Adrien, 13300 Salon de Provence (FR); Venture, Guy, 13560 Senas (FR)
(74) Mandataire: David, Alain

(56) Documents cités:
- EP-A- 1 666 382
- WO-A-01/52179
- WO-A-2006/070460
- US-A1- 2002 070 862
- US-A1- 2005 200 457
- US-A1- 2006 082 440

## Description

### Domaine de l'invention

La présente invention se rapporte au domaine de la logistique et du stockage d'objets divers et elle concerne plus particulièrement l'inventaire d'objets entreposés dans des magasins généraux, entrepôts, ateliers, bibliothèques ou tous autres lieux de stockage.

### Art antérieur

La collecte et la manutention d'objets, par exemple dans des magasins généraux en vue de leur expédition, notamment lorsqu'il s'agit d'effectuer celles-ci rapidement et sans erreurs, nécessite d'avoir un inventaire complet et localisé de ces objets. Or, la réalisation d'un tel inventaire est une tâche longue, fastidieuse et pour éviter toute source d'erreurs, elle nécessite une particulière attention de la part des manutentionnaires qui effectuent en général cette opération. L'inventaire d'un entrepôt de marchandises peut ainsi prendre plusieurs jours.

On connaît avec la demande US2004/0111335 un système d'inventaire reposant sur l'utilisation d'indicateurs RFID placés sur les articles à inventorier et destinés à coopérer avec un lecteur RFID se déplaçant parmi ces indicateurs et interrogeant successivement chacun d'entre eux. Le déplacement du lecteur est supposé s'effectuer en continu selon les trois dimensions de l'espace par un ensemble de câbles et de poulies.

Ce système semble toutefois peu adapté à la localisation d'objets disposés dans un entrepôt sur des rayons ou des étagères d'un palettier.

Le document US 2005/200457divulgue un système pour réaliser un simple inventaire d'objets sans possibilité de les localiser individuellement. Un chariot du système dispose d'un lecteur/interrogateur pour lire les informations contenues dans des transpondeurs attachés aux objets. Ce système ne connait pas la localisation précise de ces objets dans la structure d'entreposage.

Le document WO 2006/070460 décrit l'utilisation d'un bouclier de protection pour déterminer le transpondeur du rack à l'origine d'un signal reçu par un lecteur/ interrogateur du chariot lorsqu'un colis portant un numéro d'identification donné est mis en place ou retiré d'un rack d'une structure d'entreposage. Il est possible d'associer dans une mémoire du lecteur/interrogateur une référence d'un colis à un rack de la structure d'entreposage. Toutefois, cette association est alors figée et si un des colis est déplacé manuellement de sa position d'origine par un manutentionnaire, il ne pourra plus être retrouvé car cette association mémorisée de correspondra plus à la réalité.

### Objet et définition de l'invention

La présente invention a pour objet de pallier cet inconvénient en proposant un système automatisé à la fois simple et économique pour dresser de façon fiable et rapide un inventaire permettant une localisation d'objets.

Ce but est atteint par un système selon la revendication 1.

Ainsi, l'emploi de transpondeurs de localisation RFID sur les montants de la structure d'entreposage permet de localiser avec précision les emplacements de chacun des objets à inventorier.

Avantageusement, chacun des montants verticaux commençant et terminant une rangée est en outre muni d'un repère de calage destiné à coopérer avec un dispositif de calage associé au dit lecteur/interrogateur RFID. Ainsi, le dispositif de calage permet de garantir une lecture optimale.

De préférence, le système comporte un détecteur de présence pour signaler ou non la présence d'un objet dans chacun des emplacements de ladite structure d'entreposage.

Dans un mode de réalisation préférentiel, ledit lecteur/interrogateur RFID, ledit détecteur de présence et ledit dispositif de calage sont montés sur un chariot élévateur destiné à se déplacer devant chacune des rangées de ladite structure d'entreposage.

Avantageusement, ledit dispositif de calage comporte un ensemble d'émission/réception optique et ledit détecteur de présence comporte un capteur à ultrasons.

Selon le mode de réalisation envisagé, lesdits moyens de traitement peuvent consister en un ensemble informatique de gestion distant auquel les informations reçues des transpondeurs nécessaires pour dresser l'inventaire localisé sont retransmises par ledit lecteur/interrogateur RFID depuis des moyens d'émission/réception sans fil.

La présente invention concerne également un procédé de réalisation d'un inventaire localisé d'objets munis chacun d'un transpondeur RFID destiné à coopérer avec un lecteur/interrogateur RFID et disposés à différents emplacements d'une structure d'entreposage composée d'une pluralité de rangées supportées par des montants verticaux comportant chacun au niveau de chacune des rangées un transpondeur de localisation RFID, procédé consistant à déplacer ledit lecteur/interrogateur RFID successivement devant chacune des rangées de ladite structure d'entreposage et, pendant ce déplacement, à interroger et lire les données reçues des transpondeurs RFID desdits objets et les données reçues de chacun des transpondeurs de localisation RFID, et à partir de ces lectures successives à déterminer l'emplacement de chacun desdits objets dans ladite structure d'entreposage.

Avantageusement, ladite acquisition de données est inhibée le temps nécessaire au lecteur/interrogateur RFID de passer d'une rangée à une autre.

Pour déterminer l'emplacement de chaque objet, il est procédé à un premier filtrage sur les données reçues des transpondeurs en supprimant les lectures parasites et en ne gardant que les lectures majoritaires. Il est en outre procédé à un second filtrage consistant en l'élaboration d'une moyenne par pondération des lectures relatives à un transpondeur déterminé de façon à permettre d'ordonner séquentiellement les barycentres de chacun de ces transpondeurs.

De préférence, il est en outre procédé à une vérification de la cohérence de l'inventaire en comparant le nombre d'objets inventoriés dans une zone déterminée de ladite structure d'entreposage avec le nombre d'emplacements disponibles dans ladite zone déterminée.

De préférence, pendant ledit déplacement, il est procédé à une détermination de la présence ou non d'un objet à chacun des emplacements de ladite structure d'entreposage.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique d'un système de réalisation d'inventaires localisés selon l'invention mis en oeuvre au niveau d'un palletier dans un atelier de stockage de marchandises,
- les figures 2 et 3 illustrent les différentes étapes du procédé d'acquisition et de traitement des données d'inventaires, et
- la figure 4 montre un exemple du positionnement des objets à partir des données d'inventaires collectées.

### Description détaillée d'un mode de réalisation préférentiel

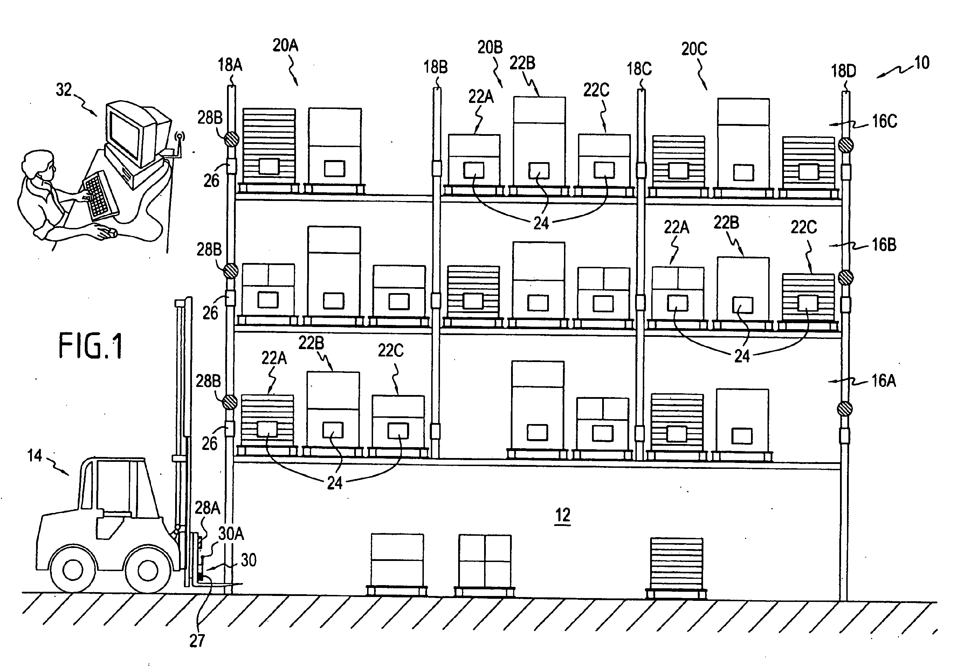

La figure 1 montre de façon très schématique un entrepôt de marchandises comportant une structure d'entreposage ou palettier 10 surmontant une zone de préparation (picking) 12 dans laquelle les commandes sont préparées. Les marchandises sont disposées à l'emplacement du palettier qui leur a été attribué au moyen d'un chariot élévateur 14 qu'un cariste peut alors déplacer devant tous les emplacements du palettier. On notera, que dans certains domaines d'industrie (médiathèque par exemple), le chariot peut être avantageusement remplacé par un système autonome entièrement robotisé ne nécessitant aucune intervention humaine.

Le palettier est constitué de plusieurs rangées (par exemple 16A, 16B, 16C) fixées à des hauteurs déterminées sur des montants verticaux, par exemple 18A, 18B, 18C, 18D. Au niveau de chaque rangée chaque travée 20A, 20B, 20C formée entre deux montants verticaux successifs comporte un nombre déterminé d'emplacements, par exemple 22A, 22B, 22C. Les distances entre deux rangées successives et entre deux montants verticaux peuvent être identiques ou non.

Chaque palette comporte un émetteur/récepteur radio-fréquence (RFID Tag 24) positionné soit sur le support même soit sur les marchandises. De préférence, celui-ci sert à la fois à l'identification de la palette et de son contenu (pour permettre par exemple la gestion du stock et des renouvellements et pour la tenue de la comptabilité analytique de l'entrepôt). Ce transpondeur RFID miniaturisé qui comporte classiquement des moyens mémoires peut par exemple être intégré dans une étiquette collée sur le revêtement plastifié entourant la palette, de préférence toujours sensiblement à un même emplacement déterminé, en hauteur et largeur, par rapport aux dimensions normalisées de la palette.

Selon l'invention, chaque montant vertical de la structure d'entreposage est muni au niveau de chaque rangée d'un émetteur/récepteur radio-fréquence (RFID tag 26) destiné à la localisation des palettes. Dans l'exemple illustré, il est prévu un transpondeur de localisation RFID tous les trois emplacements de palette. Bien entendu, tout autre configuration, avec des nombres identiques ou non par rangée, est envisageable. Toutefois, pour une rangée donnée, tous ces transpondeurs sont placés à une même hauteur prédéterminée.

Pour permettre de détecter des éventuels emplacements vides, il est prévu que le système selon l'invention comporte un capteur à ultrasons 27 ou tout autre moyen de détection de présence équivalent pour détecter la présence ou non d'une palette à chacun des emplacements du palettier. De préférence, ce détecteur de présence est disposé sur le chariot élévateur 14 mais une disposition au niveau de chaque emplacement du palletier est aussi envisageable.

Enfin, un dispositif de calage, de préférence à émission/réception optique 28A, dont un repère de calage 28B est présent sur chacun des deux montants verticaux d'extrémité de chaque rangée est prévu sur le chariot élévateur (ou un dispositif robotisé en faisant fonction), pour permettre un positionnement précis de moyens d'interrogation 30 portés par le chariot élévateur ou le dispositif robotisé.

En effet, les moyens de lecture/interrogation radio-fréquence dont ce chariot est pourvu sont destinés à coopérer avec les transpondeurs de chaque palette 24 et les transpondeurs de localisation 26, de façon à permettre un inventaire géo-localisé complet, rapide et fiable de la structure d'entreposage. Ainsi, en détectant à la fois les transpondeurs de localisation et de palette, il est possible d'identifier sans erreur possible précisément l'emplacement (le positionnement) de chaque palette sur le palettier.

Ce lecteur/interrogateur RFID comporte classiquement des moyens d'émission/réception formés d'une ou plusieurs antennes spécialement adaptées aux émissions RFID, par exemple de type parabolique, à guide d'ondes rectangulaire ou à réseau plan. Cette antenne radio-fréquence est couplée, comme il est connu, à un module électronique auto-alimenté comportant une source radio-fréquence et des composants électroniques (alimentation, modulateur, détecteur, convertisseur, unité de traitement) nécessaires à l'alimentation à distance des transpondeurs et à la mémorisation des informations d'identification échangées entre le module électronique et les transpondeurs. Selon la capacité mémoire disponible, le traitement des informations reçues pour la réalisation de l'inventaire des objets entreposés peut être effectué en temps réel totalement ou en partie dans l'unité de traitement du lecteur/interrogateur RFID ou bien en différé à l'extérieur de celui-ci.

Dans ce second cas et selon une configuration envisagée, l'antenne radio-fréquence peut aussi servir de relais pour un ensemble émetteur/récepteur maître, comme il est décrit par exemple dans le brevet US 5,936,527, directement relié à un ensemble informatique distant 32 à même d'assurer cet inventaire ainsi que la gestion de l'entrepôt via une base de données interne. Mais de préférence, le lecteur/interrogateur RFID intègre des moyens d'émission/réception sans fil courte distance 30A, de type bluethooth ou WiFi par exemple, pour retransmettre les informations reçues des transpondeurs (et des données d'état du détecteur de présence) en vue de la réalisation de l'inventaire vers cet ensemble informatique comportant alors un moyen d'émission/réception sans fil compatible pour recevoir ces informations.

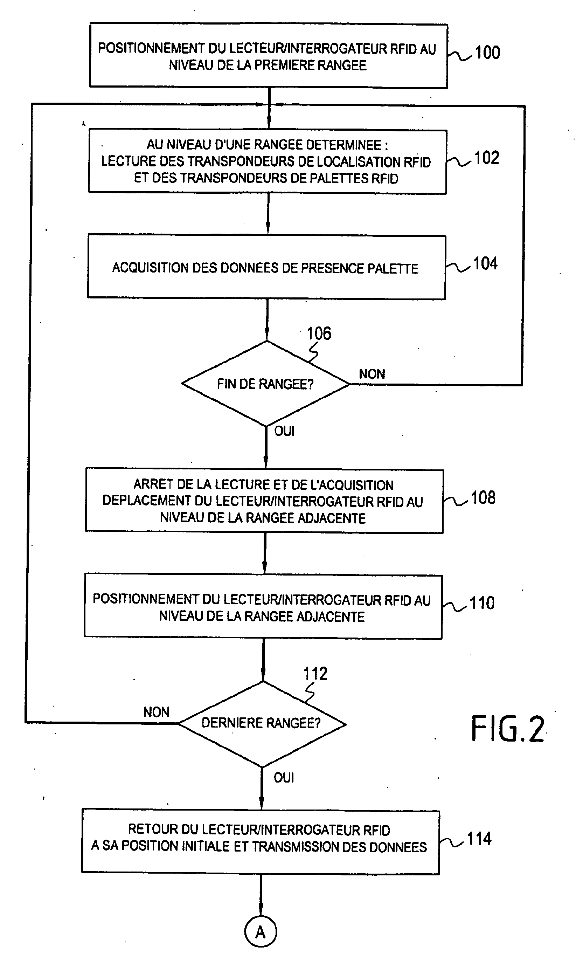

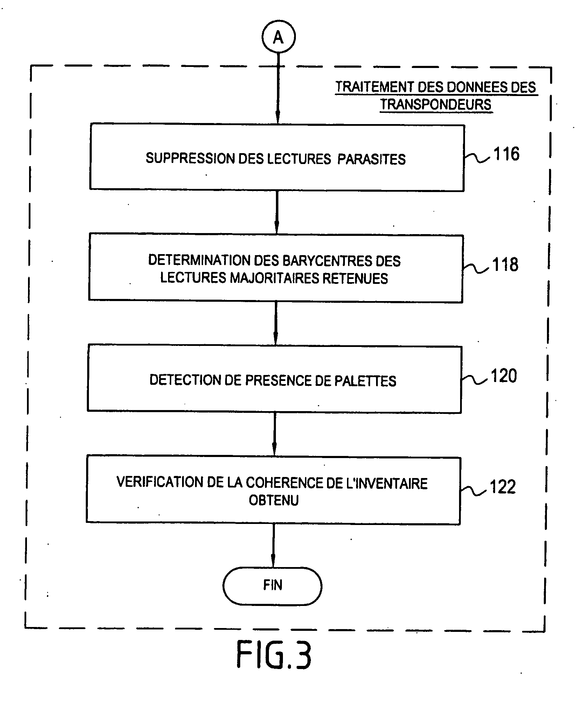

Le procédé mis en oeuvre dans le système selon l'invention est maintenant décrit en regard des figures 2 à 4.

La première étape 100 de l'inventaire consiste à placer le chariot élévateur devant un premier montant à une extrémité de la première rangée 16A afin de permettre au dispositif de calage de positionner le lecteur/interrogateur RFID à une hauteur prédéterminée assurant une lecture optimale des transpondeurs, c'est-à-dire à une hauteur correspondant à celle des transpondeurs de localisation sur lesquels les transpondeurs des palettes sont de préférence alignés.

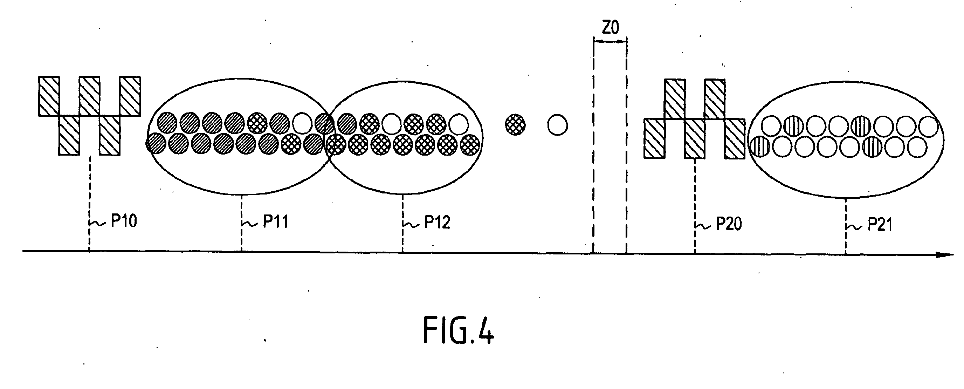

Une fois ce calage effectué, le chariot peut alors, dans une étape suivante 102, se déplacer devant la structure d'entreposage tout le long de la première rangée, pour procéder comme il est connu à l'acquisition des données lues dans les transpondeurs. Durant ce déplacement, il est aussi procédé à l'acquisition des données d'état délivrées par le détecteur de présence (étape 104). A l'autre extrémité de la rangée, une fois la détection du repère de calage associé au dernier montant effectuée (test de l'étape 106), les acquisitions de nouvelles données sont inhibées (zone sans lecture Z0 de la figure 4) le temps de permettre au chariot de faire un demi-tour et au lecteur/interrogateur RFID de se déplacer au niveau de la seconde rangée (étape 108) afin de permettre au dispositif de calage, dans une étape 110, de positionner le lecteur/interrogateur RFID à une nouvelle hauteur prédéterminée assurant une lecture optimale des transpondeurs de la seconde rangée.

Puis, il est alors comme précédemment procédé à l'acquisition des données des transpondeurs et des données d'état de la seconde rangée avant que le chariot ne fasse une nouvelle fois demi-tour au bout de cette nouvelle rangée. Le processus se répète ainsi pour toutes les rangées du dispositif d'entreposage jusqu'au dernier montant 18D de la dernière rangée 16C (étape 112) à l'issu duquel l'acquisition des données nécessaires à l'inventaire est terminée et le chariot peut revenir dans sa position initiale (étape 114).

Pour fournir l'inventaire géo-localisé de la structure d'entreposage, ces données accumulées dans les moyens mémoires du lecteur/interrogateur sont alors soit traitées en temps réel totalement ou en partie directement par les moyens de traitement du lecteur/interrogateur RFID soit transmises à l'ensemble informatique de gestion distant 32 qui en assure un traitement différé. On notera toutefois, que selon la capacité de mémorisation du lecteur/interrogateur RFID, la transmission de données peut aussi s'effectuer au fur et à mesure de la lecture de ces données.

Le traitement des données aboutissant à l'inventaire géo-localisé est décrit plus précisément en référence à la figure 4 qui montre à titre illustratif le traitement en référence à la figure 1 de la dernière travée 20C de la première rangée 16A et celui du premier emplacement 22C situé sur la rangée 16B immédiatement supérieure.

Il consiste tout d'abord dans une étape 116 à effectuer un premier filtrage sur les données reçues des transpondeurs en supprimant les lectures parasites et en ne gardant que les lectures majoritaires. En effet, les transpondeurs de localisation et de palette sont lus plusieurs fois lors du déplacement du chariot (voir par exemple sur la figure 4, les 5 lectures du premier transpondeur de localisation ou les 13 lectures du premier transpondeur de palette) et un même transpondeur pourra être lu lors du passage devant deux rangées superposées ou devant deux travées adjacentes (voir par exemple sur la figure 4, la double lecture du transpondeur de la seconde palette de la dernière travée lors du passage devant la première palette de cette même travée et la lecture d'un transpondeur de palette de la seconde rangée lors du passage devant la première palette de la première rangée).

Une fois ce premier filtrage effectué, il ne reste plus que des lectures pertinentes de transpondeurs et il peut alors être procédé à un second filtrage dans une étape 118 consistant en l'élaboration d'une moyenne par pondération des lectures relatives à un transpondeur déterminé de façon à permettre d'ordonner séquentiellement les barycentres de chacun des transpondeurs de localisation ou de palette. Ainsi, chaque transpondeur est positionné dans le temps et par rapport aux autres, notamment par rapport aux transpondeurs de localisation (voir sur la figure 4, les différents positionnements ainsi obtenus de P10 à P21).

Dans une étape suivante 120, il est procédé à l'analyse des données issus du détecteur de présence pour déterminer si une zone sans lecture de transpondeurs (ou avec des lectures non significatives comme illustré à la figure 4 au niveau du troisième emplacement de la dernière travée de la première rangée) correspond à un emplacement vide, c'est à dire laissé sans palette, ou à la présence d'une palette dont le transpondeur est défectueux et donc inactif. En effet, si le détecteur détecte la présence d'un obstacle, c'est qu'une palette sans transpondeur est rangée dans l'emplacement correspondant sinon c'est que cet emplacement est vide (voir sur la figure 4, le dernier emplacement de la dernière travée de la première rangée).

Enfin, la cohérence des résultats obtenus est vérifiée dans une ultime étape 122 en s'assurant que chaque travée ne comporte pas plus de palettes qu'il n'y a d'emplacements, c'est-à-dire que le nombre d'objets inventoriés dans une zone déterminée de la structure d'entreposage, en l'espèce une travée, correspond au nombre d'emplacements disponibles dans cette zone, en l'espèce trois dans l'exemple du palettier de la figure 1 (mais ce nombre n'est aucunement limitatif).

Avec ce procédé d'inventaire, les interventions des différents manutentionnaires sont réduites au maximum ce qui limite les risques d'erreur (qui sont particulièrement préjudiciables dans le cas de marchandises à forte valeur ou dont la vente est réglementée) ou d'oubli dû au caractère fastidieux de cette tâche et accroît de façon significative les cadences de lecture.

Ainsi, par exemple, un inventaire dans un entrepôt d'un transporteur de colis express peut être dressé en deux heures avec deux caristes au lieu de trois journées avec plusieurs manutentionnaires munis chacun d'un lecteur de codes à barres.

On notera que si la description précitée a été faite essentiellement en regard de marchandises, elle peut bien entendu s'appliquer à tout autre type d'objets équipés chacun d'un transpondeur et pouvant être stockés dans un lieu d'entreposage quelconque comme un atelier, une bibliothèque, un musée, une pharmacie et dont l'inventaire est effectué au moyen d'un dispositif mobile d'interrogation de type chariot ou autre, que ce dispositif soit mobile depuis le sol comme décrit ou suspendu depuis le plafond de ce lieu d'entreposage.

## Revendications

1. Système pour la réalisation d'inventaires localisé d'objets munis chacun d'un transpondeur RFID (24) destiné à coopérer avec un lecteur/interrogateur RFID (30) et disposés à différents emplacements d'une structure d'entreposage (10) composée d'une pluralité de rangées (16A-16C) supportées par des montants verticaux (18A-18D), **caractérisé en ce que** chacun des montants verticaux de cette structure d'entreposage est muni au niveau de chacune des rangées d'un transpondeur de localisation RFID (26),
**en ce que** le système est adapté là lire successivement rangée après rangée des informations reçues des transpondeurs RFID (24) desdits objets et de chacun desdits transpondeurs de localisation RFID (26), et **en ce que** le système comporte en outre des moyens de traitement (30 ; 32) pour, à partir de ces lectures successives, déterminer les positions respectives de chacun desdits objets les uns par rapport aux autres et par rapport aux dits montants verticaux, afin de dresser un inventaire localisé des objets présents sur ladite structure d'entreposage.

2. Système selon la revendication 1, **caractérisé en ce que** lesdits moyens de traitement comportent en outre des moyens pour élaborer une moyenne par pondération desdites lectures successives relatives à un transpondeur déterminé de façon à permettre d'ordonner séquentiellement les barycentres de chacun de ces transpondeurs.

3. Système selon la revendication 1, **caractérisé en ce que** chacun des montants verticaux commençant (18A) et terminant (18D) une rangée est en outre muni d'un repère de calage (28B) destiné à coopérer avec un dispositif de calage (28A) associé au dit lecteur/interrogateur RFID.

4. Système selon la revendication 3, **caractérisé en ce que** ledit dispositif de calage comporte un ensemble d'émission/réception optique.

5. Système selon la revendication 3, **caractérisé en ce qu'**il comporte en outre un détecteur de présence (27) pour signaler ou non la présence d'un objet dans chacun desdits emplacements de la structure d'entreposage.

6. Système selon la revendication 5, **caractérisé en ce que** ledit détecteur de présence comporte un capteur à ultrasons.

7. Système selon la revendication 5, **caractérisé en ce que** ledit lecteur/interrogateur RFID (30), ledit détecteur de présence (27) et ledit dispositif de calage (28A) sont montés sur un chariot élévateur (14) destiné à se déplacer devant chacune des rangées de ladite structure d'entreposage.

8. Système selon la revendication 1, **caractérisé en ce que** lesdits moyens de traitement consiste en un ensemble informatique de gestion distant (32) auquel les informations reçues des transpondeurs nécessaires pour dresser l'inventaire localisé sont retransmises par ledit lecteur/interrogateur RFID depuis des moyens (30A) d'émission/réception sans fil.

9. Procédé de réalisation d'un inventaire localisé d'objets munis chacun d'un transpondeur RFID (24) destiné à coopérer avec un lecteur/interrogateur RFID (30) et disposés à différents emplacements d'une structure d'entreposage (10) composée d'une pluralité de rangées (16A-16C) supportées par des montants verticaux (18A-18D) comportant chacun au niveau de chacune des rangées un transpondeur de localisation RFID (26), le procédé consistant à déplacer ledit lecteur/interrogateur RFID (30) successivement devant chacune des rangées de ladite structure d'entreposage et, pendant ce déplacement, à interroger et lire (102) les données reçues des transpondeurs RFID (24) desdits objets et les données reçues de chacun des transpondeurs de localisation RFID (26), et à partir de ces lectures successives à déterminer l'emplacement de chacun desdits objets dans ladite structure d'entreposage.

10. Procédé selon la revendication 9, **caractérisé en ce que** ladite acquisition de données est inhibée le temps nécessaire au lecteur/interrogateur RFID de passer d'une rangée à une autre.

11. Procédé selon la revendication 9, **caractérisé en ce que**, pour déterminer l'emplacement de chaque objet, il est procédé à un premier filtrage (116, 118) sur les données reçues des transpondeurs en supprimant les lectures parasites et en ne gardant que les lectures majoritaires.

12. Procédé selon la revendication 11, **caractérisé en ce qu'**il est en outre procédé à un second filtrage consistant en l'élaboration d'une moyenne par pondération des lectures relatives à un transpondeur déterminé de façon à permettre d'ordonner séquentiellement les barycentres de chacun de ces transpondeurs.

13. Procédé selon l'une quelconque des revendications 9 à 12, **caractérisé en ce qu'**il est en outre procédé à une vérification (122) de la cohérence de l'inventaire en comparant le nombre d'objets inventoriés dans une zone déterminée de ladite structure d'entreposage avec le nombre d'emplacements disponibles dans ladite zone déterminée.

14. Procédé selon l'une quelconque des revendications 9 à 13, **caractérisé en ce qu'**en outre, pendant ledit déplacement, il est procédé à une détermination de la présence (120) ou non d'un objet à chacun des emplacements de ladite structure d'entreposage.

## Claims

1. System for producing location-based inventories of objects each furnished with an RFID transponder (24) designed to interact with an RFID reader/interrogator (30) and placed at different locations of a warehousing structure (10) consisting of a plurality of rows (16A-16C) supported by vertical uprights (18A-18D), **characterized in that** each of the uprights of this warehousing structure is furnished at each of the rows with an RFID location transponder (26), **in that** the system is adapted for successively reading row after row information received from the RFID transponders (24) of the said objects and from each of the RFID location transponders (26) and **in that** the system further comprises processing means (30; 32) for, from these successive read, determining the respective locations of each of the said objects in comparison with each others and with the said vertical uprights, in order to produce a location-based inventory of the objects present on the said warehousing structure.

2. System according to claim 1, **characterized in that** the said processing means further comprise means for generating a weighted average of the successive reads relative to a determined transponder in order to make it possible to place the barycentres of each of these transponders in sequential order.

3. System according to Claim 1, **characterized in that** each of the beginning uprights (18A) and end uprights (18D) of a row is also furnished with a lock-on marker (28B) designed to interact with a lock-on device (28A) associated with the said RFID reader/interrogator.

4. System according to Claim 3, **characterized in that** the said lock-on device comprises an optical transceiver assembly.

5. System according to Claim 3, **characterized in that** it also comprises a presence detector (27) to indicate or not the presence of an object in each of the said locations of the warehousing structure.

6. System according to Claim 5, **characterized in that** the said presence detector comprises an ultrasound sensor.

7. System according to Claim 5, **characterized in that** the said RFID reader/interrogator (30), the said presence detector (27) and the said lock-on device (28A) are mounted on a forklift truck (14) designed to pass in front of each of the rows of the said warehousing structure.

8. System according to Claim 1, **characterized in that** the said processing means consist of a remote management data processing assembly (32) to which the information received from the transponders that is necessary for producing the location-based inventory is retransmitted by the said RFID reader/interrogator from wireless transceiver means (30A).

9. Method for producing a location-based inventory of objects each furnished with an RFID transponder (24) designed to interact with an RFID reader/interrogator (30) and placed at different locations in a warehousing structure (10) consisting of a plurality of rows (16A-16C) supported by vertical uprights (18A-18D) each comprising at each of the rows an RFID location transponder (26), the said method consisting in moving the said RFID reader/interrogator (30) in front of each of the rows of the said warehousing structure in turn and, during this movement, in interrogating and reading (102) the data received from the RFID transponders (24) of the said objects and the data received from each of the RFID location transponders (26), and from these successive read in determining the location of each of the said objects in the said warehousing structure.

10. Method according to Claim 9, **characterized in that** the said data acquisition is disabled for the time necessary for the RFID reader/interrogator to pass from one row to another.

11. Method according to Claim 9, **characterized in that**, in order to determine the location of each object, a first filtration (116, 118) is carried out on the data received from the transponders by deleting the spurious reads and by retaining only the majority reads.

12. Method according to Claim 11, **characterized in that** a second filtration is also carried out consisting in generating a weighted average of the reads relative to a determined transponder in order to make it possible to place the barycentres of each of these transponders in sequential order.

13. Method according to any one of Claims 9 to 12, **characterized in that** a verification (122) of the consistency of the inventory is also carried out by comparing the number of objects inventoried in a determined zone of the said warehousing structure with the number of locations available in the said determined zone.

14. Method according to any one of Claims 9 to 13, **characterized in that**, during the said movement, the presence or absence of an object (120) in each of the locations of the said warehousing structure is also determined.

## Patentansprüche

1. System zur Durchführung von Bestandsaufnahmen mit Standortangabe von Objekten, die jeweils mit einem RFID-Transponder (24) versehen sind, der dazu bestimmt ist, mit einem RFID-Lese-/Abfragegerät (30) zusammenzuwirken, und die an verschiedenen Plätzen einer Lagerkonstruktion (10) angeordnet sind, die aus mehreren Etagen (16A-16C) besteht, die von vertikalen Stützen (18A-18D) getragen werden, **dadurch gekennzeichnet, daß** jede der vertikalen Stützen dieser Lagerkonstruktion auf der Höhe einer jeden Etage mit einem RFID-Lokalisierungstransponder (26) versehen ist, **dadurch**, daß das System dafür eingerichtet ist, nacheinander, Etage für Etage, Informationen zu lesen, die von den RFID-Transpondern (24) der Objekte und von jedem der RFID-Lokalisierungstransponder (26) empfangen werden, und **dadurch**, daß das System außerdem Verarbeitungsmittel (30, 32) aufweist, um, ausgehend von diesen aufeinanderfolgenden Ablesungen, die jeweiligen Positionen der einzelnen Objekte relativ zueinander und relativ zu den vertikalen Stützen zu bestimmen, um ein Bestandsverzeichnis mit Standortangabe der in der Lagerkonstruktion vorhandenen Objekte zu erstellen.

2. System nach Anspruch 1, **dadurch gekennzeichnet, daß** die Verarbeitungsmittel außerdem Mittel zur Bildung eines gewichteten Mittelwertes der aufeinanderfolgenden Ablesungen in bezug auf einen bestimmten Transponder aufweisen, um zu ermöglichen, die Massenmittelpunkte jedes der Transponder der Reihe nach zu ordnen.

3. System nach Anspruch 1, **dadurch gekennzeichnet, daß** jede der vertikalen Stützen, die eine Etage beginnen (18A) und beenden (18D), außerdem mit einer Verriegelungsmarkierung (28B) versehen ist, die dazu bestimmt ist, mit einer Verriegelungsvorrichtung (28A) zusammenzuwirken, die dem RFID-Lese-/Abfragegerät zugeordnet ist.

4. System nach Anspruch 3, **dadurch gekennzeichnet, daß** die Verriegelungsvorrichtung eine optische Sende-/Empfangsanordnung aufweist.

5. System nach Anspruch 3, **dadurch gekennzeichnet, daß** es außerdem einen Anwesenheitsdetektor (27) aufweist, um das Vorhandensein oder Nichtvorhandensein eines Objekts auf jedem der Plätze der Lagerkonstruktion zu signalisieren.

6. System nach Anspruch 5, **dadurch gekennzeichnet, daß** der Anwesenheitsdetektor einen Ultraschallsensor aufweist.

7. System nach Anspruch 5, **dadurch gekennzeichnet, daß** das RFID-Lese-/Abfragegerät (30), der Anwesenheitsdetektor (27) und die Verriegelungsvorrichtung (28A) an einem Hubwagen (14) angebracht sind, der dazu bestimmt ist, sich an jeder der Etagen der Lagerkonstruktion vorbeizubewegen.

8. System nach Anspruch 1, **dadurch gekennzeichnet, daß** die Verarbeitungsmittel aus einer Ferndispositions-Computeranordnung (32) bestehen, zu welcher die von den Transpondern empfangenen Informationen, die zum Erstellen des Bestandsverzeichnisses mit Standortangabe erforderlich sind, durch das RFID-Lese-/Abfragegerät von drahtlosen Sende-/Empfangsmittein (30A) aus weitergesendet werden.

9. Verfahren zur Durchführung einer Bestandsaufnahme mit Standortangabe von Objekten, die jeweils mit einem RFID-Transponder (24) versehen sind, der dazu bestimmt ist, mit einem RFID-Lese-/Abfragegerät (30) zusammenzuwirken, und die an verschiedenen Plätzen einer Lagerkonstruktion (10) angeordnet sind, die aus mehreren Etagen (16A-16C) besteht, die von vertikalen Stützen (18A-18D) getragen werden, die jeweils auf der Höhe einer jeden Etage einen RFID-Lokalisierungstransponder (26) aufweisen, wobei das Verfahren darin besteht, das RFID-Lese-/Abfragegerät (30) nacheinander an jeder der Etagen der Lagerkonstruktion vorbeizubewegen und während dieser Bewegung die Daten, die von den RFID-Transpondern (24) der Objekte empfangen werden, und die Daten, die von jedem der RFID-Lokalisierungstransponder (26) empfangen werden, abzufragen und zu lesen (102), und ausgehend von diesen aufeinanderfolgenden Ablesungen den Platz jedes der Objekte in der Lagerkonstruktion zu bestimmen.

10. Verfahren nach Anspruch 9, **dadurch gekennzeichnet, daß** die Erfassung von Daten um die Zeit verzögert wird, die das RFID-Lese-/Abfragegerät benötigt, um sich von einer Etage zu einer anderen zu bewegen.

11. Verfahren nach Anspruch 9, **dadurch gekennzeichnet, daß**, um den Platz jedes Objekts zu bestimmen, die von den Transpondern empfangenen Daten einer ersten Filtration (116, 118) unterzogen werden, indem die störungsbedingten Ablesedaten weggelassen werden und nur die überwiegenden Ablesedaten beibehalten werden.

12. Verfahren nach Anspruch 11, **dadurch gekennzeichnet, daß** außerdem eine zweite Filtration durchgeführt wird, die in der Bildung eines gewichteten Mittelwertes der Ablesungen in bezug auf einen bestimmten Transponder besteht, um zu ermöglichen, die Massenmittelpunkte dieser einzelnen Transponder der Reihe nach zu ordnen.

13. Verfahren nach einem der Ansprüche 9 bis 12, **dadurch gekennzeichnet, daß** außerdem eine Überprüfung (122) der Kohärenz des Bestands durchgeführt wird, indem die Anzahl der inventarisierten Objekte in einem bestimmten Bereich der Lagerkonstruktion mit der Anzahl der verfügbaren Plätze in dem bestimmten Bereich verglichen wird.

14. Verfahren nach einem der Ansprüche 9 bis 13, **dadurch gekennzeichnet, daß** außerdem während der Vorbeibewegung eine Bestimmung des Vorhandenseins (120) oder Nichtvorhandenseins eines Objekts auf jedem der Plätze der Lagerkonstruktion vorgenommen wird.
